# FASCICULE DE BREVET EUROPEEN

(11) **EP 2 320 595 B1**
(45) Date de publication et mention de la délivrance du brevet: **30.05.2018**
(21) Numéro de dépôt: 10188990.5
(22) Date de dépôt: 27.10.2010
(51) Int. Cl.: H04L 9/06

(54) **Protection d'une clé de chiffrement**
Sicherung eines Verschlüsselungsschlüssels
Protection of a cryptographic key

(30) Priorité: 04.11.2009 FR 0957782
(43) Date de publication de la demande: 11.05.2011
(73) Titulaire: STMicroelectronics (Rousset) SAS, 13790 Rousset (FR)
(72) Inventeur: Liardet, Pierre-Yvan, 13790, PEYNIER (FR); Marinet, Fabrice, 13790, CHATEAUNEUF LE ROUGE (FR)
(74) Mandataire: Cabinet Beaumont

(56) Documents cités:
- EP-A1- 2 120 388
- WO-A1-03/010638
- FR-A1- 2 847 093

## Description

### Domaine de l'invention

La présente invention concerne de façon générale les circuits électroniques et, plus particulièrement, les unités de traitement de données mettant en oeuvre des algorithmes de chiffrement ou de déchiffrement. L'invention concerne plus particulièrement les mécanismes de protection d'une ou plusieurs clés manipulées par de tels algorithmes. En particulier, l'invention s'applique à la détection d'une perturbation unidirectionnelle de bits d'une telle clé.

### Exposé de l'art antérieur

Lorsque l'on utilise une unité de traitement (typiquement un cryptoprocesseur) pour mettre en oeuvre un algorithme de chiffrement, on cherche à vérifier que la clé manipulée n'est pas modifiée (accidentellement ou volontairement), soit lors de son transfert vers le cryptoprocesseur depuis un circuit externe, soit une fois dans celui-ci alors qu'elle est contenue dans un registre spécifique de ce cryptoprocesseur. Les attaques visant à perturber l'état d'un bit d'un registre du cryptoprocessuer sont généralement des attaques utilisant un laser pointé sur un des bits du registre contenant la clé afin d'en perturber la valeur.

Pour contrer une modification lors du transfert, une solution est de recharger la clé dans le cryptoprocesseur le plus souvent possible, généralement à chaque nouveau chiffrement, ou périodiquement. Toutefois, le registre de clé du cryptoprocesseur reste sensible aux attaques par laser.

Pour vérifier l'intégrité de la clé une fois qu'elle est dans le cryptoprocesseur, le plus simple serait de lire cette clé pour la contrôler à l'extérieur du cryptoprocesseur Cependant, pour protéger la clé contre d'éventuelles tentatives de piratage, l'élément de mémorisation temporaire (registre) qui contient la clé n'est généralement accessible depuis l'extérieur du cryptoprocesseur qu'en écriture. La vérification d'intégrité consiste alors à vérifier la cohérence de résultats obtenus par deux calculs distincts utilisant la clé contenue dans le cryptoprocesseur. Ces deux calculs sont soit deux chiffrements d'un même message avec la clé, soit un chiffrement suivi d'un déchiffrement.

Mais, les résultats d'un mécanisme de vérification d'intégrité peuvent renseigner un attaquant sur la valeur des bits de la clé. Par exemple, si un des bits de la clé est modifié dans le registre de clé et que les ancienne et nouvelle valeurs de ce bit sont les mêmes, le mécanisme de vérification est incapable de s'en apercevoir, que la vérification soit directe (par relecture) ou indirecte (par deux calculs distincts). Cela rend la clé vulnérable à une attaque ou perturbation connue sous le nom de perturbation unidirectionnelle, qui consiste à forcer un bit de la clé vers une seule des valeurs possibles. Par exemple, le bit attaqué est forcé à 0 quel que soit son état (1 ou 0) initial. Le forçage d'un bit dans un seul des deux états peut permettre à un attaquant de déterminer la valeur de ce bit selon que son attaque est ou non détectée (si elle n'est pas détectée, c'est que le bit de la clé a la valeur de forçage - si elle l'est, c'est que le bit de la clé a l'autre état). La répétition de cette attaque sur chaque bit de la clé permet d'obtenir sa valeur.

Le document FR-A-2 847 093 décrit un mécanisme de protection contre des attaques par canaux cachés d'une exécution d'un algorithme DES. Ce document ne fait pas mention d'une vérification d'intégrité de la clé mais d'un masquage de la consommation lors de l'exécution pour protéger cette clé contre un piratage.

Le document WO 03/010638 décrit un mécanisme de protection contre des attaques par canaux cachés qui prévoit des exécutions parallèles d'un algorithme avec des données et leur complément à un.

Le document "The Sorcerer's Apprentice Guide to Fault Attacks" de Bal-El Hagai et al., Proceeding of the IEEE, février 2006, volume 94, No.2, pages 370-382, décrit un procédé de protection contre des injections de fautes qui prévoit de traiter une donnée et une donnée complémentée à 1 dans deux blocs différents.

### Résumé

Il serait souhaitable de disposer d'un mécanisme de protection de la valeur d'une clé manipulée par un circuit de chiffrement, qui pallie tout ou partie des inconvénients - des mécanismes de vérification d'intégrité usuels.

Il serait également souhaitable de détecter une perturbation unidirectionnelle d'un bit d'une clé en détectant une inversion d'un bit ou une absence d'inversion, sans pour autant rendre la clé vulnérable.

Pour atteindre tout ou partie de ces objets ainsi que d'autres, il est prévu un procédé de vérification d'intégrité d'une clé de chiffrement mise en oeuvre, par un circuit électronique, dans un algorithme symétrique de chiffrement ou de déchiffrement d'un message, comportant les étapes de :
complémenter à un la clé et le message ;
exécuter deux fois l'algorithme, respectivement avec la clé et le message et avec la clé et le message complémentés à un, la sélection entre celle des exécutions qui traite la clé et le message et celle qui traite la clé et le message complémentés à un étant aléatoire ; et
vérifier la cohérence entre les deux exécutions. Selon un mode de réalisation de la présente invention, les deux exécutions sont effectuées séquentiellement dans un ordre aléatoire.

Selon un mode de réalisation de la présente invention, les deux exécutions sont effectuées en parallèle, en sélectionnant des registres de calcul de façon aléatoire.

Selon un mode de réalisation de la présente invention, les deux exécutions sont des chiffrements, le résultat d'une des exécutions étant complémentée à un avant l'étape de vérification.

Selon un mode de réalisation de la présente invention, les deux exécutions sont un chiffrement et un déchiffrement.

Selon un mode de réalisation de la présente invention, l'algorithme utilisé est le DES ou une de ses variantes.

On prévoit également un circuit électronique adapté pour la mise en oeuvre du procédé de protection.

On prévoit également un système incluant un circuit électronique de chiffrement ou de déchiffrement et un circuit électronique de traitement des données chiffrées ou de données déchiffrées, adapté pour la mise en oeuvre du procédé de protection.

### Brève description des dessins

Ces objets, caractéristiques et avantages, ainsi que d'autres seront exposés en détail dans la description suivante de modes de réalisation particuliers faite à titre non-limitatif en relation avec les figures jointes parmi lesquelles :
la figure 1 est une vue schématique d'une carte à puce du type à laquelle s'applique à titre d'exemple la présente invention ;
la figure 2 est un schéma bloc d'un système utilisant une unité de chiffrement/déchiffrement de type cryptoprocesseur ;
la figure 3 est un schéma bloc partiel d'un circuit intégrant une unité de chiffrement/déchiffrement et une unité centrale de traitement ;
les figures 4A et 4B sont des schémas blocs illustrant un exemple d'algorithme de chiffrement et de déchiffrement auquel appliquer une vérification d'intégrité ; et
la figure 5 illustre, de façon très schématique et sous forme de blocs, un mode de mise en oeuvre du mécanisme de vérification.

### Description détaillée

De mêmes éléments ont été désignés par de mêmes références aux différentes figures. Par souci de clarté, seuls les étapes et éléments utiles à la compréhension de l'invention ont été représentés et seront décrits. En particulier, l'exploitation faite des données à chiffrer ou des données chiffrées n'a pas été détaillée, l'invention étant compatible avec toute exploitation usuelle. De plus, les éléments de l'unité de traitement cryptographique ou des autres circuits n'ont pas été détaillés, l'invention étant là encore compatible avec les structures habituelles. On fera par la suite référence au terme chiffrement pour désigner, sauf précision contraire, un chiffrement et/ou un déchiffrement qui sont des mécanismes similaires (application d'un algorithme à des données et une ou plusieurs clés).

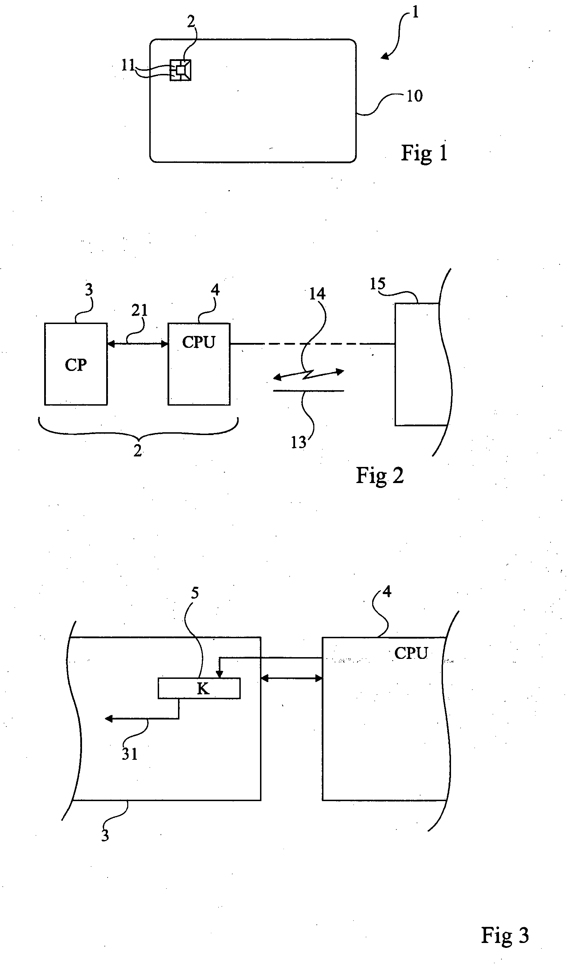

La figure 1 est une représentation schématique d'une carte à puce 1 du type à laquelle s'appliquent à titre d'exemple les modes de réalisation qui vont être décrits. Une telle carte 1 est constituée d'un support 10 par exemple en matière plastique qui porte ou inclut un ou plusieurs circuits intégrés 2. Le ou les circuits 2 sont susceptibles de communiquer avec l'extérieur de la carte (par exemple, avec un terminal de lecture ou de lecture-écriture) à l'aide de contacts 11 ou par des éléments d'émission-réception sans contact (non représentés) à la manière d'un transpondeur électromagnétique. Le ou les circuits 2 incluent au moins une unité de chiffrement (généralement appelée cryptoprocesseur) capable d'exécuter des calculs de chiffrement et/ou de déchiffrement à partir d'une ou plusieurs clés chargées dans l'unité de traitement.

L'utilisation d'algorithmes de chiffrement trouve de nombreuses applications dans l'industrie électronique, qu'il s'agisse des systèmes à carte à puce, des systèmes de télévision à péage, des systèmes de communications chiffrées, etc. Dans tous les cas, on retrouve une unité de traitement algorithmique capable de mettre en oeuvre des mécanismes de chiffrement et/ou de déchiffrement.

La figure 2 est une représentation sous forme de blocs d'un système utilisant un cryptoprocesseur 3 (CP). Ce cryptoprocesseur est un circuit intégré considéré comme inviolable et qui net en oeuvre un ou plusieurs algorithmes de chiffrement ou de déchiffrement appliqués à des données qu'il reçoit de l'extérieur, en utilisant une ou plusieurs clés qu'il contient ou qu'il reçoit de l'extérieur. Le cryptoprocesseur 3 est, par exemple, susceptible de communiquer avec une unité de traitement 4 (par exemple une unité centrale de traitement-CPU) d'un circuit 2 intégrant les deux éléments 3 et 4 (et généralement d'autres circuits non représentés tels que des mémoires volatiles ou non, une interface d'entrée-sortie, etc.). Le circuit 2 est capable de communiquer par liaison filaire 13 ou par liaison sans fil 14 avec un dispositif séparé 15, par exemple, un circuit d'exploitation des données chiffrées ou déchiffrées.

La figure 3 est un détail du schéma de la figure 2 faisant apparaître, dans le circuit 3, un élément de mémorisation temporaire interne 5 (typiquement un registre). Bien entendu, l'unité 3 comporte généralement plusieurs registres pour stocker temporairement les données chiffrées, à chiffrer et autres variables, ainsi que d'autres éléments lui permettant d'exécuter l'algorithme de chiffrement (logique câblée, mémoires, unité de traitement d'instructions logicielles, etc.). On se préoccupe ici d'un registre particulier qui est destiné à contenir la clé de chiffrement K. On désignera par la suite ce registre 5, registre de clé. Le cas échéant, l'unité 3 contient plusieurs registres de clé. Le contenu du registre 5 est lu par le cryptoprocesseur3 (liaison 31) à chaque fois qu'il a besoin de la clé pour une opération de chiffrement ou de déchiffrement.

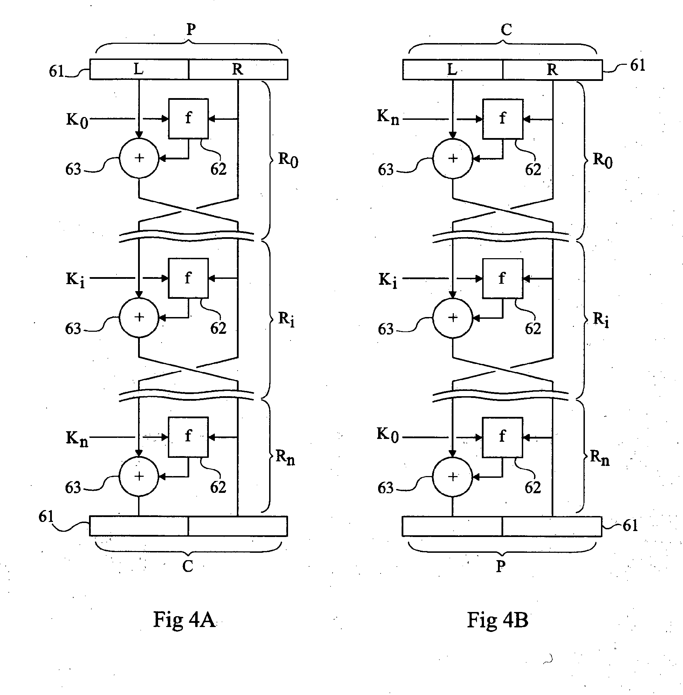

Les figures 4A et 4B illustrent respectivement, sous forme de blocs, l'architecture d'algorithmes de chiffrement et de déchiffrement du type auquel s'applique, à titre d'exemple, la protection.

Les algorithmes concernés sont des algorithmes dits de Feistel. De tels algorithmes effectuent un chiffrement symétrique, par blocs, et se caractérisent par des opérations de chiffrement et de déchiffrement similaires, voire identiques, ne nécessitant qu'une inversion de l'ordre d'utilisation de clés (ou sous-clés) extraites de la clé contenue dans le registre de clé. Le plus souvent, les réseaux ou schémas de Feistel combinent plusieurs tours (rounds) d'opérations identiques incluant une fonction de diffusion (par exemple, une permutation des bits), une fonction non linéaire (par exemple, de type substitution) produisant un effet de confusion,et un mélange linéaire utilisant une combinaison bit à bit (Ou-Exclusif bit à bit). Parmi les algorithmes de Feistel, on choisira ceux qui respectent la propriété que le résultat du chiffrement d'un message par une clé est égal au complément à un du résultat du chiffrement du complément à un du message par le complément à un de la clé.

Un exemple d'algorithme de Feistel qui respecte cette propriété est l'algorithme DES (Data Encryption Standard) et ses différentes variantes. D'autres exemples sont les algorithmes connus sous les noms LOKI et GHOST.

L'opération de chiffrement (figure 4A) consiste à soumettre un message à chiffrer P (plain text) à des opérations successives. Le message P est séparé en deux parties de tailles identiques (désignées arbitrairement, partie droite R et partie gauche L). Ce message est contenu dans un registre 61 du circuit 3 (ou dans deux registres respectivement affectés aux parties droite et gauche). L'algorithme s'effectue en n+1 tours Rᵢ (i étant compris entre 0 et n>1). A chaque tour, la partie droite R. du registre 61 est soumise (bloc 62) à une fonction non linéaire f avec une sous-clé Kᵢ (i compris entre 0 et n). Cette sous-clé est obtenue à partir d'une clé de chiffrement globale (typiquement, la clé K contenue dans le registre 5 - figure 3). Le résultat de la fonction de chiffrement est mélangé (bloc 63, addition bit à bit modulo 2 ou combinaison Ou-Exclusif bit à bit) avec la partie gauche L du registre qui correspond au résultat du tour précédent (du message P pour le premier tour R₀). Enfin, les parties droite R et gauche L sont permutées pour le tour suivant. A la fin du n^{ième} tour, on obtient le message chiffré C. Le dernier tour Rₙ ne comporte généralement pas de permutation des parties droite et gauche. Le message C est généralement contenu dans le registre 61 ayant servi durant tout le calcul. La même cellule de calcul (fonction 62 et combineur 63) peut être utilisée pour chaque tour.

L'opération de déchiffrement (figure 4B) consiste à soumettre un message chiffré C (ciphered text) aux n tours Ri mais en utilisant les sous-clés dans un ordre inverse (commencer par la clé Kₙ pour finir par la clé K₀), afin d'obtenir le message en clair P.

Dans le cas de l'algorithme DES, le premier tour est précédé d'une opération de mélange des bits (permutation) et le dernier tour est suivi de l'opération inverse.

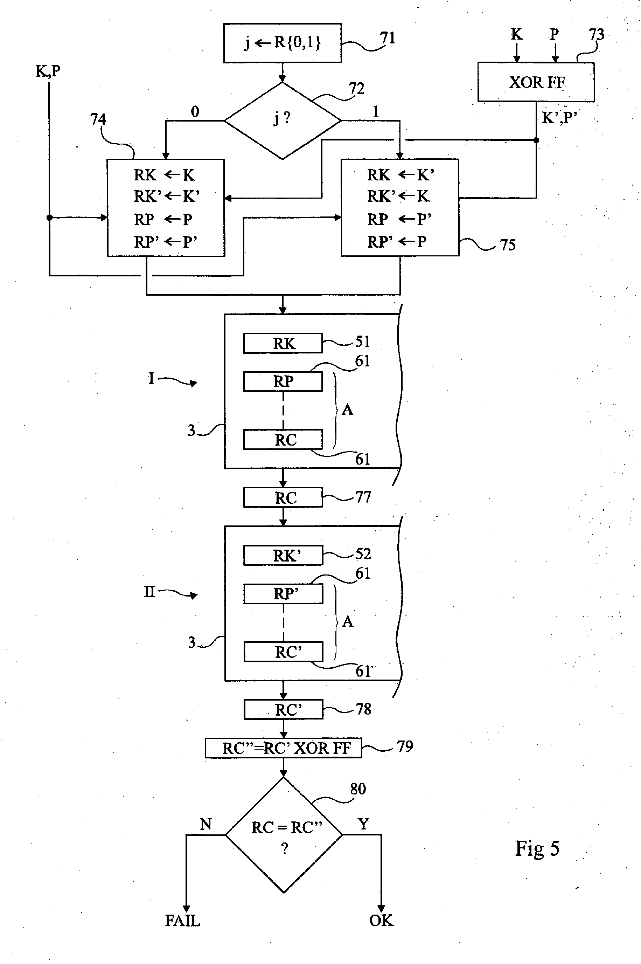

La figure 5 est un schéma bloc d'un mode de réalisation d'un mécanisme de vérification d'intégrité d'une clé K, protégé contre une perturbation unidirectionnelle d'un bit de la clé.

Dans cet exemple, un tirage non déterministe (aléatoire ou pseudo aléatoire) est effectué (bloc 71, j <- R{0, 1}) entre deux valeurs (par exemple 0 ou 1) pour sélectionner l'ordre dans lequel vont être effectuées les étapes de vérification.

Selon l'état 0 ou 1 du bit j de sélection (bloc 72, j ?), la clé K et le message en clair P et leur compléments à un (bloc 73, XOR FF) respectif K' et P' sont transférés dans des registres différents. En figure 5, cela est illustré par l'utilisation de variables intermédiaires RK, RK', RP et RP' dans lesquelles sont chargées respectivement les valeurs K, K', P et P' (bloc 74, RK <- K, RK' <- K', RP <- P et RP' <- P') ou les valeurs K', K, P' et P (bloc 75, RK <- K', RK' <- K, RP <- P' et RP' <- P) selon que le bit j est à l'état 0 ou 1. La variable RK est chargée dans un registre 51 et la variable RK' est chargée dans un registre 52. Les opérations de complément à un peuvent être effectuées par l'unité centrale provoquant le chargement dans les registres concernés ou, si son jeu d'instructions le lui permet, par le cryptoprocesseur 3. Deux applications I et II de l'algorithme A sont effectuées successivement en utilisant la clé RK contenue dans le registre 51 pour chiffrer la variable RP chargée dans un registre 61, puis en utilisant la clé RK' contenue dans le registre 52 et la variable RP' chargée à son tour dans le registre 61. Dans l'exemple de la figure 5, on suppose que l'application I, par le cryptoprocesseur 3, de l'algorithme A au message P s'effectue dans un registre 61 et que son application II au message P' s'effectue dans le même registre. Dans ce cas, le premier résultat RC obtenu est transféré dans un registre 77 avant la deuxième application de l'algorithme dont le résultat RC' est, le cas échéant, transféré dans un registre 78. En variante, des registres différents sont utilisés pour les deux calculs I et II, ce qui évite le transfert des résultats. La cohérence entre le résultat RC et le complément à un (bloc 79, RC"=RC' XOR FF) du résultat RC' est vérifiée (bloc 80, RC=RC" ?) en vérifiant s'ils sont identiques (OK, sortie Y du bloc 80). On détecte ainsi un défaut d'intégrité de la clé (FAIL, sortie N du bloc 80), c'est-à-dire une modification d'au moins un bit de la clé entre les deux exécutions de l'algorithme. La comparaison est, de préférence, effectuée par le cryptoprocesseur. Un défaut d'intégrité est utilisé pour empêcher le résultat chiffré de sortir du cryptoprocesseur, ou entreprendre toute autre action appropriée en cas de suspicion de modification de la clé accidentelle ou volontaire (attaque).

Cette mise en oeuvre tire profit de la propriété indiquée précédemment (pour tout message P et toute clé K, le complément à un C' du résultat C de l'algorithme de chiffrement A est égal au résultat de l'application de cet algorithme au message complémenté P' avec la clé complémentée K'). Cette propriété se traduit par le fait que la fonction non linéaire f de l'algorithme A respecte que le résultat (f (X, Kᵢ)) de son application à une donnée X avec une sous-clé Kᵢ est égal au résultat (f(X', Kᵢ')) de son application aux compléments à un X' de la donnée et Kᵢ' de la sous-clé. Parmi les algorithmes de Feistel, on choisira donc ceux dont la fonction respecte cette propriété. C'est notamment le cas des algorithmes DES, LOKI et GHOST, mais pas de ceux connus sous les noms RC5, Twofish, Blowfish ou Camelia.

On notera que les calculs du complément à un de la clé et du message (bloc 73) peuvent être effectués au début du processus ou à la volée lors de la première ou seconde application de l'algorithme selon l'état du tirage aléatoire. De même, plutôt que de transférer la clé et son complément dans deux registres 51 et 52, un seul registre peut être utilisé dans le cas où les deux applications de l'algorithme ne sont pas simultanées. En variante, si les deux exécutions I et II sont effectuées en parallèle (donc en même temps), quatre registres doivent être utilisés pour les variables RK, RK', RP et RP'.

Le résultat qui peut être sorti du cryptoprocesseur (placé dans un élément de mémorisation interne, accessible en lecture par l'unité centrale 2 ou autre circuit utilisant le processeur 3) est dans un quelconque des registres 77 et 78 et a été vérifié.

Lorsqu'un attaquant cible une attaque par perturbation unidirectionnelle d'un bit du registre de clé 51 ou 52, la détection de faute susceptible de le renseigner va indiquer une faute qui dépend de la séquence utilisée et non de la clé utilisée. Par exemple, si l'attaque consiste à forcer un bit à 0 et que le bit vaut initialement 1, une faute sera détectée sur l'exécution avec la clé K mais pas sur l'exécution avec le complément à un K'. A l'inverse, si le bit vaut initialement 0 (sa valeur n'est donc pas modifiée par l'attaque), la faute sera détectée sur l'exécution avec la clé K' mais pas sur l'exécution avec la clé K.

Le fait de sélectionner aléatoirement (plus généralement de façon non déterministe) celle des exécutions I et II qui traite les données (clé et message) et celle qui traite les données complémentées évite donc que le résultat du test 80 soit exploitable en cas d'attaque par perturbation unidirectionnelle. En fait, la probabilité que l'état du bit déduit du résultat du test 80 soit .le bon est d'1/2. Par conséquent, pour chaque bit, il y a une chance sur deux d'entraîner un attaquant sur une fausse piste.

Les séquences I et II doivent toutefois ne pas pouvoir être distinguées lors de leur exécution. Pour cela, la séquence I qui utilise le message et la clé en clair comporte de préférence des calculs identiques aux calculs de compléments à un mais avec la valeur 0 (de façon à ne pas modifier les valeurs des bits) . Par rapport à la représentation de la figure 5, cela revient à ajouter des calculs sur la clé K, le message P et le résultat S correspondant à des combinaisons Ou-Exclusif bit à bit avec la valeur 0.

Les étapes listées ci-dessous illustrent un exemple d'opérations successives en utilisant une même cellule de calcul du DES du circuit 3 (cet exemple correspond à la figure 5 où un même registre 61 sert aux deux calculs) :
1. Tirage aléatoire du bit j. Selon l'état 0 ou 1 du bit, exécution d'une séquence I' puis d'une séquence II', ou exécution de la séquence II' suivie de la séquence I'.

### Séquence I' :

21. Calcul sur le message P (OU-Exclusif bit à bit avec la valeur 0) ;
22. Chargement de P dans le registre 61 ;
23. Calcul sur la clé K (OU-Exclusif bit à bit avec la valeur 0) ;
24. Chargement du registre 51 avec la valeur K ;
25. Sélection du registre 51 comme registre de clé du DES ;
26. Exécution du DES ;
27. Déchargement du résultat RC dans le registre 77 ; et
28. Calcul sur le résultat RC (OU-Exclusif bit à bit avec la valeur 0).

### Séquence II' :

21'. Calcul du complément à un P' du message P (OU-Exclusif bit à bit avec la valeur 1) ;
22'. Chargement de P' dans le registre 61 ;
23'. Calcul du complément à un K' de la clé K (OU-Exclusif bit à bit avec la valeur 1) ;
24'. Chargement du registre 52 avec la valeur K' ;
25'. Sélection du registre 52 comme registre de clé du DES ;
26'. Exécution du DES ;
27'. Déchargement du résultat RC' dans le registre 78 ; et
28'. Calcul du complément à un RC" du résultat RC' (OU-Exclusif bit à bit avec la valeur 1) ;
et enfin :
3. Vérification que les résultats RC et RC" sont identiques.

Selon une variante de réalisation, plutôt que de vérifier l'identité entre les résultats RC et RC" de deux applications successives de l'algorithme, on effectue un chiffrement suivi d'un déchiffrement. Ainsi, le résultat RC de la première application I du chiffrement avec la clé RK (qui vaut K ou K' selon l'état du bit j) est déchiffré (algorithme A⁻¹) en utilisant la clé RK' (qui correspond au complément à un de la clé RK). Puis, le résultat du déchiffrement complémenté à un est comparé au message initial P.

Ce mécanisme de protection proposé est compatible avec les structures usuelles des cryptoprocesseurs et n'en demande aucune modification (à l'exception, pour certaines variantes, de la fonction de complément à un si l'on souhaite qu'elle soit interne au circuit 3). En particulier, il est toujours possible de choisir entre une vérification parallèle ou série et de partager la cellule de calcul.

On peut s'apercevoir de l'efficacité d'un tel mécanisme de protection en modifiant, après le chargement de la clé dans le cryptoprocesseur ou à chaque chargement de cette clé, un des bits du registre de clé. Si ce mécanisme a été mis en oeuvre, l'application de la clé obtenue par l'attaque ne permet pas le chiffrement. Dans le cas contraire, l'attaque unidirectionnelle fournit la clé.

Un intérêt supplémentaire de la vérification effectuée est qu'elle vérifie l'exécution même de l'algorithme de chiffrement. En effet, si une erreur se produit pendant l'exécution de l'algorithme, les résultats ne concorderont pas.

D'autre part, grâce à la sélection aléatoire de l'ordre des applications de l'algorithme, le pirate ne peut déterminer l'état d'origine de la clé car la perturbation unidirectionnelle aura lieu avec une équiprobabilité pour chaque bit de la clé.

Différents modes de réalisation ont été décrits. Différentes variantes et modifications sont à la portée de l'homme du métier. En particulier, le choix entre une exécution parallèle ou série (exécutions successives) dépend en pratique d'un compromis entre rapidité de traitement et encombrement du cryptoprocesseur. De plus, la mise en oeuvre pratique est à la portée de l'homme du métier à partir des indications fonctionnelles données ci-dessus, que ce soit pour une mise en oeuvre logicielle ou matérielle. En outre, si l'invention a été décrite en relation avec des algorithmes de Feistel, elle s'applique plus généralement à des algorithmes symétriques pour lesquels le résultat du chiffrement d'un message par une clé est égal au complément à un du résultat du chiffrement du complément à un du message par le complément à un de la clé.

## Revendications

1. Procédé de vérification d'intégrité d'une clé de chiffrement (K) mise en oeuvre, par un circuit électronique, dans un algorithme symétrique (A) de chiffrement ou de déchiffrement d'un message (P), comportant les étapes de :
complémenter à un (73) la clé et le message ;
exécuter deux fois (I, II) l'algorithme, respectivement avec la clé et le message et avec la clé et le message complémentés à un (K', P'), la sélection entre celle des exécutions qui traite la clé et le message et celle qui traite la clé et le message complémentés à un étant aléatoire ; et
vérifier (80) la cohérence entre les deux exécutions.

2. Procédé selon la revendication 1, dans lequel les deux exécutions (I, II) sont effectuées séquentiellement dans un ordre aléatoire.

3. Procédé selon la revendication 1, dans lequel les deux exécutions (I, II) sont effectuées en parallèle, en sélectionnant des registres de calcul de façon aléatoire.

4. Procédé selon l'une quelconque des revendications 1 à 3, dans lequel les deux exécutions (I, II) sont des chiffrements, le résultat d'une des exécutions étant complémentée à un avant l'étape de vérification.

5. Procédé selon la revendication 2, dans lequel les deux exécutions sont un chiffrement et un déchiffrement.

6. Procédé selon l'une quelconque des revendications 1 à 5, dans lequel l'algorithme utilisé est le DES ou une de ses variantes.

7. Circuit électronique adapté pour la mise en oeuvre du procédé conforme à l'une quelconque des revendications 1 à 6.

8. Système incluant un circuit électronique (3) de chiffrement ou de déchiffrement et un circuit électronique (2) de traitement des données chiffrées ou de données déchiffrées, adapté pour la mise en oeuvre du procédé conforme à l'une quelconque des revendications 1 à 6.

## Patentansprüche

1. Ein Verfahren zum Schützen eines Schlüssels (K), der von einer elektronischen Schaltung in einem symmetrischen Algorithmus (A) zum Chiffrieren bzw. Verschlüsseln oder Dechiffrieren bzw. Entschlüsseln einer Nachricht (P) verwendet wird, wobei Das Verfahren folgende Schritte aufweist:
Komplementieren des Schlüssels und der Nachricht zu Eins (73);
Ausführen des Algorithmus zweimal (I, II), jeweils mit dem Schlüssel und der Nachricht und mit dem Schlüssel und der Nachricht, die zu Eins komplementiert wurden (K', P'), wobei die Auswahl zwischen der Ausführung, die den Schlüssel und die Nachricht verarbeitet, und der, die den Schlüssel und die Nachricht, die zu Eins komplementiert wurden, verarbeitet, zufällig ist; und
Prüfen (80) der Konsistenz zwischen den zwei Ausführungen.

2. Verfahren nach Anspruch 1, wobei die zwei Ausführungen (I, II) sequentiell in einer zufälligen Reihenfolge durchgeführt werden.

3. Verfahren nach Anspruch 1, wobei die zwei Ausführungen (I, II) parallel durch zufälliges Auswählen von Berechnungsregistern durchgeführt werden.

4. Verfahren nach einem der Ansprüche 1 bis 3, wobei die zwei Ausführungen (I, II) Chiffrierungen sind, wobei das Ergebnis einer der Ausführungen zu Eins vor dem Prüfschritt komplementiert wird.

5. Verfahren nach Anspruch 2, wobei die zwei Ausführungen eine Chiffrierung und eine Dechiffrierung sind.

6. Verfahren nach einem der Ansprüche 1 bis 5, wobei der verwendete Algorithmus der Datenverschlüsselungsstandard (Data Encryption Standard = DES) oder einer seiner Variationen ist.

7. Eine elektronische Schaltung, die geeignet ist, das Verfahren nach einem der Ansprüche 1 bis 6 zu implementieren.

8. Ein System, das eine elektronische Chiffrierung oder eine Dechiffrierungs-Schaltung (3) und eine elektronische Schaltung (2) aufweist zum Verarbeiten chiffrierter Daten oder dechiffrierter Daten, das geeignet ist, das Verfahren nach einem der Ansprüche 1 bis 6 zu implementieren.

## Claims

1. A method for protecting a key (K) used, by an electronic circuit, in a symmetrical algorithm (A) for ciphering or deciphering a message (P), comprising the steps of:
complementing to one (73) the key and the message;
executing the algorithm twice (I, II), respectively with the key and the message and with the key and the message complemented to one (K', P'), the selection between that of the executions which processes the key and the message and that which processes the key and the message complemented to one being random; and
checking (80) the consistency between the two executions.

2. The method of claim 1, wherein the two executions (I, II) are performed sequentially in a random order.

3. The method of claim 1, wherein the two executions (I, II) are performed in parallel, by randomly selecting calculating registers.

4. The method of any of claims 1 to 3, wherein the two executions (I, II) are cipherings, the result of one of the executions being complemented to one before the checking step.

5. The method of claim 2, wherein the two executions are a ciphering and a deciphering.

6. The method of any of claims 1 to 5, wherein the algorithm used is the Data Encryption Standard (DES) or one of its variations.

7. An electronic circuit capable of implementing the method of any of claims 1 to 6.

8. A system comprising an electronic ciphering or deciphering circuit (3) and an electronic circuit (2) for processing ciphered data or deciphered data, capable of implementing the method of any of claims 1 to 6.
